# EUROPÄISCHE PATENTSCHRIFT

(11) **EP 0 503 150 B1**
(45) Veröffentlichungstag und Bekanntmachung des Hinweises auf die Patenterteilung: **22.02.1995**
(21) Anmeldenummer: 91121228.0
(22) Anmeldetag: 11.12.1991
(51) Int. Cl.: B60J 3/02

(54) **Sonnenblende für Fahrzeuge**
Motor vehicle sun visor
Pare-soleil pour véhicules

(30) Priorität: 09.03.1991 DE 4107696
(43) Veröffentlichungstag der Anmeldung: 16.09.1992
(73) Patentinhaber: Gebr. Happich GmbH, D-42097 Wuppertal (DE)
(72) Erfinder: Viertel, Lothar, W-6636 Altforweiler (DE); Lecorvaisier, René, F-57470 Hombourg-Haut (FR)

(56) Entgegenhaltungen:
- EP-A- 0 076 174
- EP-A- 0 295 068
- EP-A- 0 402 586
- EP-A- 0 414 132
- US-A- 3 405 969
- US-A- 4 626 019

## Beschreibung

Die Erfindung bezieht sich auf eine Sonnenblende für Fahrzeuge mit einem Sonnenblendenkörper, der aus Kunststoffmaterial besteht und eine im Sonnenblendenkörper eingelagerte metallische, U-förmig gestaltete Rastfeder trägt, die eine in eine Lageröffnung des Sonnenblendenkörpers lösbar eingreifende Lagerachse klemmt, wobei der Sonnenblendenkörper einen annähernd rechteckig ausgebildeten Kern aufweist, der aus zwei Kernhälften gebildet ist, die in der Sonnenblendenkörper-Mittenebene gegeneinandergesetzt sind und wobei eine Kernhälfte als Träger des Sonnenblendenkörpers dient und relativ hart ausgebildet ist, während die andere Kernhälfte als Polsterkörper dient, relativ weich ausgebildet ist und aus Polypropylen-Partikelschaum besteht. Eine Sonnenblende der gattungsgemäßen Art ist durch die EP-A-0 402 586 bekannt geworden.

Sonnenblenden für Fahrzeuge sind in den vielfältigsten Ausführungsformen bekannt. Alle bekannten Sonnenblenden haben miteinander einen vielteiligen Aufbau und weiterhin miteinander gemeinsam, daß sie aus Bestandteilen der unterschiedlichsten Materialien zusammengebaut sind. Häufig bestehen die Sonnenblenden aus einer aus Stahldraht gebildeten Versteifungseinlage, aus Polsterungen aus aufgeschäumten Polyurethanen, aus Lagerböckchen aus PVC und aus Ummantelungen, die aus PVC, aus Textilmaterial, Leder oder dgl. gebildet sind. Dieser herkömmliche Aufbau der Sonnenblenden macht es schwer oder auch oftmals unmöglich, die Sonnenblenden bei der Verschrottung eines Fahrzeuges wieder in ihre Einzelteile zu zerlegen mit dem Ziel, die Einzelteile einer Wiederverwertung zuzuführen.

Bei der bekannten Sonnenblende nach der eingangs erwähnten EP-A-0 402 586 weist der Sonnenblendenkörper einen annähernd rechteckig ausgebildeten Kern auf, der aus zwei Kernhälften gebildet ist, die in der Sonnenblendenkörper-Mittenebene gegeneinandergesetzt sind. Dabei dient eine der Kernhälften als Träger des Sonnenblendenkörpers und ist als relativ hart ausgebildetes Kunststoff-Spritzgußteil ausgebildet, an dem auch eine Lagerausbildung für die einendige Aufnahme einer Sonnenblendenachse und einer diese klemmenden Feder angeformt ist. Die andere Kernhälfte besteht aus einem relativ weich eingestellten Polypropylen-Partikelschaum. Bei dieser bekannten Sonnenblende ist vorgesehen, daß die Lagerausbildung auf der der geschäumten Halbschale zugewandten Seite unter positionierter Festlegung der an der Lagerausbildung angeordneten Feder durch eine Abdeckplatte verschlossen ist. Hierdurch soll einer Taumelbewegung der Feder beim Verschwenken der Sonnenblende entgegengewirkt werden. Ein Hinweis darauf, daß die Sonnenblende nach Ablauf ihrer Lebensdauer einer Wiederverwertung zugeführt werden kann, ist der EP-A-0 402 586 nicht zu entnehmen, zumal in dieser Druckschrift nicht offenbart ist, aus welchem Material die Kunststoff-Spritzgußteile bestehen sollen. Gleiches gilt auch für eine ähnlich aufgebaute Sonnenblende nach der EP-A-0 076 174.

Der vorliegenden Erfindung liegt daher die Aufgabe zugrunde, eine Sonnenblende zur Verfügung zu stellen, die nach Ablauf ihrer Lebensdauer ohne besonderen Aufwand einer Wiederverwertung zugeführt werden kann.

Zur Lösung dieser Aufgabe ist eine Sonnenblende der eingangs genannten Art vorgesehen, die sich erfindungsgemäß dadurch auszeichnet, daß auch die relativ hart ausgebildete Kernhälfte aus Polypropylen-Partikelschaum gebildet ist, daß die beiden Kernhälften durch ineinandergreifende Vorsprünge und Vertiefungen verschiebefest aneinandergelegt sind, daß der Kern an einem Längsrand mit die Kernhälften durchsetzenden Öffnungen versehen ist und daß der Kern an dem die Öffnungen aufweisenden Längsrand von einer U-förmigen einen angerundeten Steg und Schenkel aufweisenden Schiene umgriffen ist, die als Polypropylen-Spritzgußteil ausgebildet ist, einen einstückig angeformten Gegenlagerzapfen besitzt und an den Innenseiten der Schenkel jeweils ein Lagerauge für die Lagerachse, Haltestege für die Rastfeder sowie die Durchbrüche im Kern durchsetzende, ineinandergreifende Verhakungsmittel zum Zusammenhalt der Schiene und zum Festlegen derselben am Kern angeformt aufweist.

Die erfindungsgemäße Sonnenblende trägt damit wesentlich zur allgemeinen Forderung der Umweltentlastung bei, denn das für die Herstellung eingesetzte Material kann ohne besondere Schwierigkeiten wieder aufbereitet und einem neuen Verwendungszweck zugeführt werden. Bei der erfindungsgemäßen Sonnenblende ist es lediglich erforderlich, die Rastfeder vom Kunststoffmaterial zu trennen, was dadurch vereinfacht wird, daß zwischen dem Material des Sonnenblendenkörpers und der Rastfeder keine stoffschlüssige Verbindung besteht. Die den Sonnenblendenkörper tragende Lagerachse ist ohnehin lösbar mit demselben verbunden, so daß auch insoweit dem Recyclen keine Schwierigkeiten entgegenstehen.

Vorteilhafte Ausgestaltungen und Weiterbildungen der Erfindung sind in den Unteransprüchen angegeben und ergeben sich zudem aus der nachfolgenden Beschreibung eines auf der Zeichnung dargestellten Ausführungsbeispiels der Erfindung. Es zeigen:
- Fig. 1: eine Sonnerblende in Ansicht,
- Fig. 2: die Sonnenblende nach Fig 1 in einem Zwischenmontagezustand,
- Fig. 3: eine zweite Sonnenblende in Ansicht,
- Fig. 4: einen Schnitt A-A nach Fig. 1
- Fig. 5: einen Schnitt B-B nach Fig. 3 und
- Fig. 6: eine Einzelheit der Sonnenblende.

Ein im allgemeinen gepolsterter Sonnenblendenkörper 1 weist eine Lagerachse 2 mit einem Böckchen 3 auf, mittels derer der Sonnenblendenkörper 1 an der Karosserie eines Kraftfahrzeuges in der Nähe der Windschutzscheibe befestigt ist.

Die Lagerung der Achse 2 im Sonnenblendenkörper 1 und im Böckchen 3 gestattet es, den Sonnenblendenkörper 1 sowohl nach unten gegen die Windschutzscheibe als auch seitlich gegen ein Seitenfenster zu klappen. Eine Gegenlagerachse 4, die mit der Lagerachse 2 fluchtet quert eine Öffnung 5 im Sonnenblendenkörper 1.

Der Sonnenblendenkörper 1 unfaßt einen annähernd rechteckig ausgebildeten Kern 6, eine den Kern 6 an einem Längsrand umgreifende, im Querschnitt U-förmige Schiene 7 und einen den Kern 6 und die Schiene 7 ummantelnden Folienüberzug 8.

Der Kern 6 ist aus Polypropylen-Partikelschaum gebildet und aus zwei Kernhälften 9, 10 zusammengesetzt, die in der Blendenmitte aneinanderliegen. Die Kernhälften 9, 10 sind durch ineinandergreifende Vorsprünge 11 und Vertiefungen 12 verschiebefest aneinandergelegt. Eine Kernhälfte ist relativ hart ausgelegt, um die Formstabilität des Sonnenblendenkörpers 1 zu gewährleisten, während die andere Kernhälfte relativ weich ausgelegt ist, um einen Polstereffekt zu bewirken. Die weiche Kernhälfte ist so zu plazieren, daß sie dem Benutzer der Sonnenblende in der Gebrauchslage derselben zugewendet ist.

Die U-förmige Schiene 7 besteht aus einem Polypropylen-Spritzgußteil und weist einen abgerundeten Steg sowie Schenkel 13 auf. Die Schenkel 13 sind über ein sich über die Länge des Steges erstreckendes Filmscharnier 14 miteinander verbunden. An den Schenkelinnenseiten der Schiene 7 sind Verhakungsmittel 15, Lageraugen 16 und Halterungsstege 17 angeformt. Die Halterungsstege 17 dienen zur Halterung einer metallischen Rastfeder 18 üblichen Aufbaus. Nach dem Einsetzen der Rastfeder 18 in die U-förmige Schiene 7 kann diese mit auseinandergespreizten Schenkeln 13 über eine Längsseite des Kerns 6 gesetzt und durch Zusammendrücken der Schenkel 13 am Kern 6 festgelegt werden. Die Verhakungsmittel 15 durchsetzen dabei Öffnungen 19 im Kern und verrasten miteinander, wozu sie mit angeformten Klipsnasen ausgebildet sind. Nach der Festlegung der U-förmigen Schiene 7 am Kern 6 fluchten die Bohrungen 20 der Lageraugen 16 miteinander, so daß nach dem Einstecken der Lagerachse 2 in die Bohrungen 20 der Lageraugen 16 eine zusätzliche und unbedingt zuverlässige Verriegelung erfolgt.

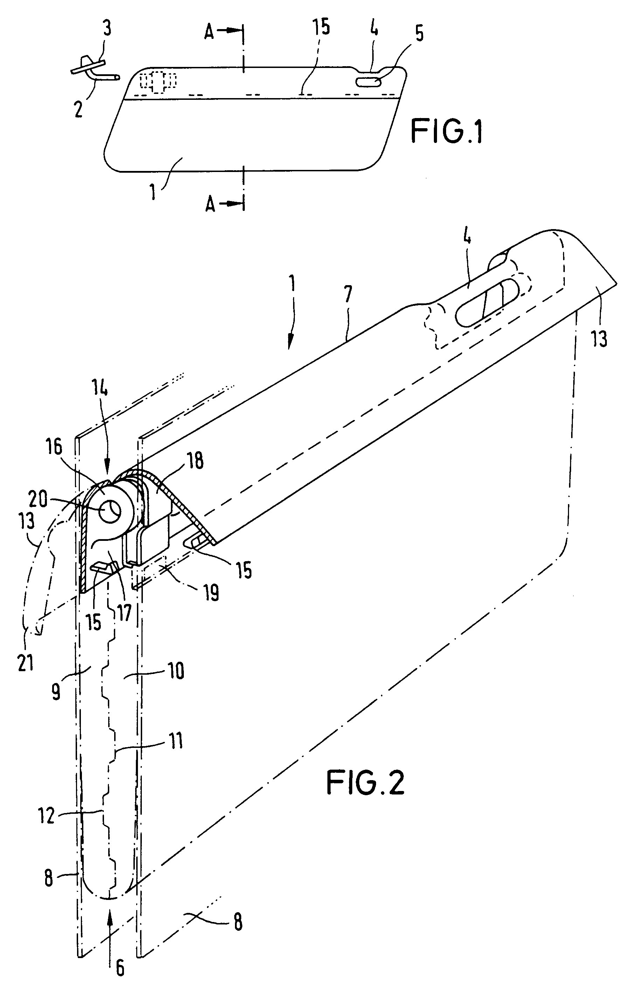

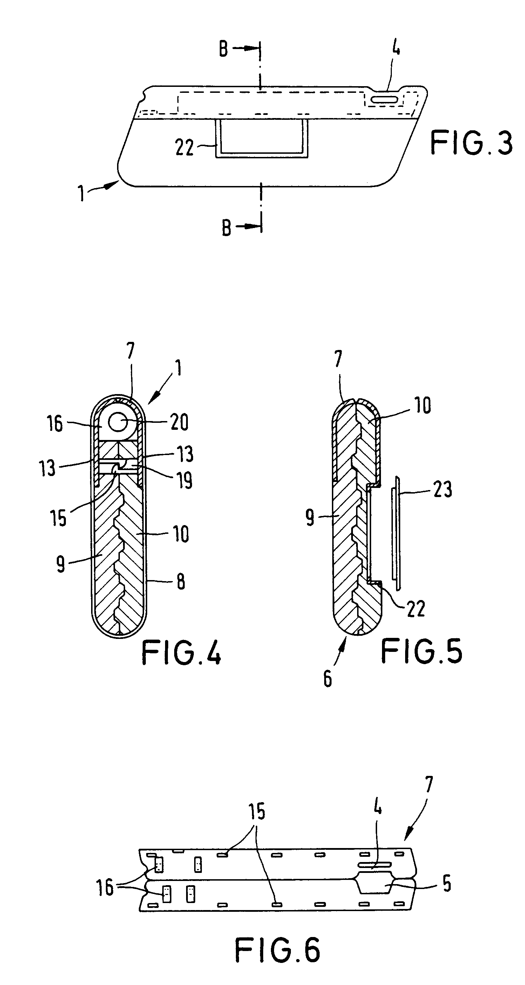

Die U-förmige Schiene 7 kann, wie in Fig. 2 gezeigt, mit stirnseitigen Abschlußwänden 21 und ferner auch, wie in Fig. 3 und 5 gezeigt, mit einem einstückig angeformten Spiegelaufnahmerahmen 22 für einen Spiegelrahmen mit Spiegel 23 ausgebildet sein. Die Anbindung des Spiegelaufnahmerahmens 22 an der Schiene 7 sollte dabei so getroffen sein, daß dieser, sofern er nicht benötigt wird, weggebrochen werden kann, was durch die Anordnung von Sollbruchstellen ohne weiteres möglich ist. Für den Spiegelaufnahmerahmen ist im Kern 6 eine entsprechende Aussparung 24 vorgesehen. Der Gegenlagerzapfen 4 ist ebenfalls einstückig mit der U-förmigen Schiene 7 ausgebildet.

Nach dem Einsetzen der Rastfeder 18 in die Schiene 7 und dem Zusammenfügen der Schiene 7 mit dem Kern 6 wird der Sonnenblendenkörper 1 noch mit einem Folienüberzug nach herkömmlichen Verfahrensarten ummantelt. Die Folienzuschnitte des Überzuges bestehen jedoch hier, wie die wesentlichen Bestandteile der neuen Sonnenblende überhaupt, aus Polypropylen.

## Patentansprüche

1. Sonnenblende für Fahrzeuge mit einem Sonnenblendenkörper (1), der aus Kunststoffmaterial besteht und eine im Sonnenblendenkörper eingelagerte metallische, U-förmig gestaltete Rastfeder (18) trägt, die eine in eine Lageröffnung des Sonnenblendenkörpers (1) lösbar eingreifende Lagerachse (2) klemmt, wobei der Sonnenblendenkörper (1) einen annähernd rechteckig ausgebildeten Kern (6) aufweist, der aus zwei Kernhälften (9, 10) gebildet ist, die in der Sonnenblendenkörper-Mittenebene gegeneinandergesetzt sind und wobei eine Kernhälfte als Träger des Sonnenblendenkörpers (1) dient und relativ hart ausgebildet ist, während die andere Kernhälfte als Polsterkörper dient, relativ weich ausgebildet ist und aus Polypropylen-Partikelschaum besteht, dadurch gekennzeichnet, daß auch die relativ hart ausgebildete Kernhälfte aus Polypropylen-Partikelschaum gebildet ist, daß die beiden Kernhälften (9, 10) durch ineinandergreifende Vorsprünge (11) und Vertiefungen (12) verschiebefest aneinandergelegt sind, daß der Kern (6) an einem Längsrand mit die Kernhälften (9, 10) durchsetzenden Öffnungen versehen ist und daß der Kern (6) an dem die Öffnungen (19) aufweisenden Längsrand von einer U-förmigen, einen angerundeten Steg und Schenkel (13) aufweisenden Schiene (7) umgriffen ist, die als Polypropylen-Spritzgußteil ausgebildet ist, einen einstückig angeformten Gegenlagerzapfen (4) besitzt und an den Innenseiten der Schenkel (13) jeweils ein Lagerauge (16) für die Lagerachse (2), Haltestege (17) für die Rastfeder (18) sowie die Durchbrüche (19) im Kern (6) durchsetzende, ineinandergreifende Verhakungsmittel (15) zum Zusammenhalt der Schiene (7) und zum Festlegen derselben am Kern (6) angeformt aufweist.

2. Sonnenblende nach Anspruch 1, dadurch gekennzeichnet, daß die U-förmige Schiene (7) einen abgerundeten Steg aufweist und daß die Schenkel (13) der Schiene (7) über ein sich über die Länge des Steges erstreckendes Filmscharnier (14) miteinander verbunden sind.

3. Sonnenblende nach Anspruch 1 oder 2, dadurch gekennzeichnet, daß die U-förmige Schiene (7) einen an einem Schenkel (13) einstückig angeformten Spiegel-Aufnahmerahmen (22) aufweist, der in eine entsprechende Aussparung (24) des Kerns (6) eingreift.

4. Sonnenblende nach wenigstens einem der Ansprüche 1 bis 3, gekennzeichnet durch einen den Kern (6) und die Schiene (7) ummantelnden Folienbezug (8), der aus Polypropylen besteht.

## Claims

1. Sun visor for vehicles, with a sun visor body (1) which is made of plastic and bears a U-shaped metallic detent spring (18) which is incorporated in the sun visor body and clamps a bearing spindle (2) engaging releasably in a bearing opening of the sun visor body (1), the sun visor body (1) having an approximately rectangularly designed core (6) which is formed from two core halves (9, 10) which are placed against each other in the centre plane of the sun visor body and one core half serving as support for the sun visor body (1) and being relatively hard in design, whereas the other core serves as half cushion body and is relatively soft in design and consists of polypropylene particle foam, characterized in that the core half which is relatively hard in design is also formed from polypropylene particle foam, in that the two core halves (9, 10) are placed against one another so as to be non-displaceable by means of intermeshing projections (11) and depressions (12), in that the core (6) is provided on one longitudinal edge with openings which penetrate the core halves (9, 10), and in that the core (6) on the longitudinal edge having the openings (19) is encircled by a U-shaped rail (7) which has a rounded web and leg (13), is designed as a polypropylene injection moulding, possesses an integrally moulded abutment pin (4) and has, moulded on the inner sides of the legs (13), in each case a bearing eye (16) for the bearing spindle (2), holding webs (17) for the detent spring (18) and intermeshing hooking means (15) which penetrate the through-holes (19) in the core (6) and are intended for holding together the rail (7) and for fixing the latter on the core (6).

2. Sun visor according to Claim 1, characterized in that the U-shaped rail (7) has a rounded web and in that the legs (13) of the rail (7) are connected to one another via a film hinge (14) extending over the length of the web.

3. Sun visor according to Claim 1 or 2, characterized in that the U-shaped rail (7) has a mirror mounting frame (22) which is integrally moulded on one leg (13) and engages in a corresponding recess (24) of the core (6).

4. Sun visor according to at least one of Claims 1 to 3, characterized by a film covering (8) which covers the core (6) and the rail (7) and is made of polypropylene.

## Revendications

1. Pare-soleil pour véhicule comportant un corps (1) qui est réalisé dans une matière plastique et qui porte un ressort d'encliquetage (18) en U, métallique, inséré dans le corps du pare-soleil, lequel serre un axe d'appui (2) s'engageant de manière amovible dans une ouverture d'appui du corps (1), le corps (1) du pare-soleil présentant un noyau (6) approximativement rectangulaire, qui est formé de deux moitiés (9, 10) lesquelles sont placées l'une contre l'autre dans le plan médian du corps et une moitié du noyau servant de support au corps (1) et étant relativement dure, tandis que l'autre moitié, servant de corps rembourré, est relativement souple et est réalisée dans une mousse à particules de polypropylène, caractérisé en ce que la moitié du noyau, relativement dure, est également formée de mousse de particules de polypropylène, en ce que les deux moitiés (9, 10) du noyau sont juxtaposées de manière à ne pouvoir coulisser, par des reliefs (11) et des creux (12) s'engageant les uns dans les autres, en ce que le noyau (9) est pourvu sur un bord longitudinal d'ouvertures traversant les moitiés (9, 10) du noyau et en ce que le noyau (6) est entouré sur le bord longitudinal présentant les ouvertures (19), par une glissière (7) en U, présentant un dos arrondi et des ailes (13), laquelle est une pièce en polypropylène moulée par injection, possède un axe de contre-appui (4) moulé d'une seule pièce et présente, sur chacun des côtés intérieurs des ailes (13), venus de moulage, un oeillet d'appui (16) pour l'axe d'appui (2), des cloisons de retenue (17) pour le ressort d'encliquetage (18) ainsi que des moyens d'accrochage (15) s'engageant es uns dans es autres traversant les ajours (19) pratiqués dans le noyau (6), afin de maintenir la glissière (7) et de fixer celle-ci sur le noyau (6).

2. Pare-soleil selon la revendication 1, caractérisé en ce que la glissière (7) en U présente un dos arrondi et en ce que les ailes (13) de la glissière (7) sont assemblées entre elles par une charnière-pellicule (14) s'étendant sur la longueur du dos.

3. Pare-soleil selon les revendications 1 ou 2, caractérisé en ce que la glissière (7) en U présente un cadre de logement de miroir (22), moulé d'une seule pièce sur une aile (13), qui s'engage dans une découpe (24) correspondante du noyau (6).

4. Pare-soleil selon l'une au moins des revendications 1 à 3, caractérisé par une feuille de revêtement (8) en polypropylène, enveloppant le noyau (6) et la glissière (7).
